# EUROPEAN PATENT APPLICATION

(11) **EP 3 103 675 A1**
(43) Date of publication of application: **14.12.2016**
(21) Application number: 15742639.6
(22) Date of filing: 29.01.2015
(51) Int. Cl.: B60L 11/18, B60L 1/00, H02J 7/00

(54) **ELECTRIC VEHICLE CONTROL DEVICE**

(30) Priority: 03.02.2014 JP 2014018790
(71) Applicant: Kabushiki Kaisha Toshiba, Minato-ku Tokyo 105-8001 (JP)
(72) Inventor: KIKKAWA, Kenichi, Tokyo 105-8001 (JP); KATO, Jin, Tokyo 105-8001 (JP); TAJIMA, Tatsuya, Settsu-shi Osaka 566-0013 (JP); OKUDA, Ryozo, Settsu-shi Osaka 566-0013 (JP)
(74) Representative: Awapatent AB
(86) International application number: PCT/JP2015/052511
(87) International publication number: WO 2015/115541

(57) **Abstract**

An electric vehicle control device according to an embodiment includes a power conversion device that receives power from an overhead line in an electrified section to perform power conversion, and that supplies driving power to a vehicle driving motor; an auxiliary power source device that receives the power from the overhead line in the electrified section to perform power conversion, and that supplies auxiliary machine driving power having predetermined auxiliary machine driving voltage lower than voltage of the driving power, to an auxiliary machine; and an electricity storage device that receives charging power and stores therein. A controller connects the electricity storage device with the charging device, and causes the charging device to charge the electricity storage device, by converting the supplied auxiliary machine driving power to the charging power in the electrified section, and causes the electricity storage device to supply the power stored therein to the power conversion device and the auxiliary power source device, instead of the power from the overhead line in a non-electrified section. Consequently, the device configuration of the hybrid power supply-type train can be simplified and the train can reliably travel non-electrified sections.

## Description

### FIELD

Embodiments of the present invention relate to an electric vehicle control device.

### BACKGROUND

In recent years, interest in energy saving has been increasing due to changes in the environment surrounding our society. If we take a look at driving systems for railway vehicles, a hybrid power-supply type train to which power is supplied from overhead lines and on-board storage batteries (batteries) has been developed to use regenerative energy effectively.

In such a hybrid type train, the on-board storage batteries are charged upon receiving power supplied from the overhead lines in an electrified section where there are overhead lines. The power stored in the on-board storage batteries is used to drive the hybrid type train in a non-electrified section without overhead lines.

### CITATION LIST

### Patent Literature

Patent Literature 1: Japanese Laid-open Patent Publication No. 2012-129138

### SUMMARY OF THE INVENTION

### Problem to be Solved by the Invention

If it is assumed that a charging device that charges on-board storage batteries mounted on a railway vehicle charges the storage batteries by directly converting the power supplied from the overhead lines, the charging needs to be controlled by taking into account the fluctuations in the voltage of the overhead lines. Thus, there are problems in that the configuration of the charging device becomes complicated, and that the size of the charging device will be increased.

If it is assumed that the railway vehicle travels in the non-electrified section, it is preferable that the on-board storage batteries are reliably charged before the railway vehicle travels in a non-electrified section, because the on-board storage batteries cannot be charged in the non-electrified section.

The present invention has been made in view of the above problems, and an object of the present invention is to provide an electric vehicle control device that can simplify the device configuration of a hybrid power-supply type train and to allow the train to reliably travel non-electrified sections.

### Means for Solving Problem

An electric vehicle control device according to an embodiment comprises a power conversion device that receives power supplied from an overhead line in an electrified section to perform power conversion, and that supplies driving power to a vehicle driving motor; an auxiliary power source device that receives the power supplied from the overhead line in the electrified section to perform power conversion, and that supplies auxiliary machine driving power having predetermined auxiliary machine driving voltage that is lower than voltage of the driving power, to an auxiliary machine; and an electricity storage device that receives supply of the charging power and stores therein. A controller connects the electricity storage device with the charging device and causes the charging device to charge the electricity storage device in the electrified section. The controller causes the electricity storage device to supply stored power of the electricity storage device to at least the power conversion device, instead of the power from the overhead line in a non-electrified section.

### BRIEF DESCRIPTION OF DRAWINGS

FIG. 1 is a schematic structural block diagram of an electric vehicle control device according to an embodiment.
FIG. 2 is a processing flowchart of the electric vehicle control device according to the embodiment.
FIG. 3 is an exemplary diagram of a driving state of a railway vehicle.
FIG. 4 is an exemplary diagram of a charging state of an electricity storage device.

### DETAILED DESCRIPTION

The following describes an embodiment with reference to the accompanying drawings.

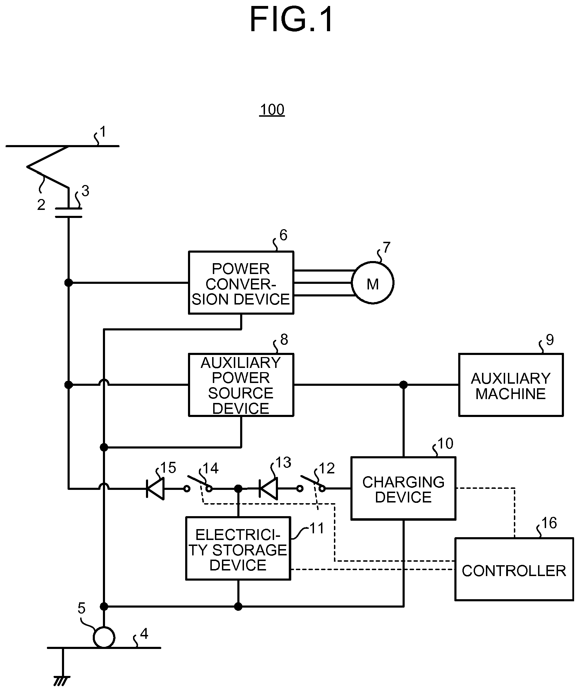

FIG. 1 is a schematic structural block diagram of an electric vehicle control device according to an embodiment.

As illustrated in FIG. 1, an electric vehicle control device 100 includes a pantograph 2 to which direct current power is supplied from a direct current overhead line 1, a main breaker 3, a wheel 5 that is grounded (low potential side power supply) via a railway track 4, and a power conversion device (inverter) 6 that converts the direct current power (for example, 600 V) supplied from the direct current overhead line 1 via the pantograph 2 and the main breaker 3, to three-phase alternating current power.

The electric vehicle control device 100 also includes a main electric motor 7 that is driven by receiving the three-phase alternating current power generated by the power conversion device 6 and that drives a railway vehicle, an auxiliary power source device 8 that converts the direct current power supplied from the direct current overhead line 1 via the pantograph 2 and the main breaker 3, to three-phase alternating current power of constant voltage and constant frequency (for example, 200 V and 50 Hz), and an auxiliary machine (auxiliary machine group) 9 that is driven by receiving the three-phase alternating current power generated by the auxiliary power source device 8.

The electric vehicle control device 100 further includes a charging device 10 to which the three-phase alternating current power of constant voltage and constant frequency is supplied from the auxiliary power source device 8 and that boosts (for example, 600 V) the three-phase alternating current power to create charging power, a charging control switch 12 that is closed when an electricity storage device 11 is being charged, and a reverse flow prevention diode 13 during charging that prevents reverse flow of current when the electricity storage device 11 is being charged. The electric vehicle control device 100 still further includes a discharge control switch 14 that is closed when the electricity storage device 11 is being discharged, a reverse flow prevention diode 15 during discharging that prevents reverse flow of current when the electricity storage device 11 is being discharged, and a controller 16 that controls the charging device 10, the charging control switch 12, and the discharge control switch 14 by monitoring the charging state of the electricity storage device 11.

With the structure described above, the power of the electricity storage device 11 that forms a hybrid power supply is charged by converting the three-phase alternating current power of constant voltage and constant frequency that is supplied from the auxiliary power source device 8, instead of the power supplied from the overhead line. Because the charging device 10 does not need to take voltage fluctuations into account, the device configuration can be simplified and the size can be easily reduced. As a result, when an existing train is remodeled to be a hybrid power supply-type train, an installation location of the charging device can be easily secured. Also, in addition to the constant voltage and constant frequency, the electricity storage device 11 is charged with a small amount of current over a long period of time. Thus, the heat generation amount of the storage battery due to charging is suppressed, thereby exerting a favorable effect on the life. Also, the electricity storage device 11 can be efficiently charged to the upper limit of the charge amount that can be set accordingly.

Next, an operation of the embodiment will be described.

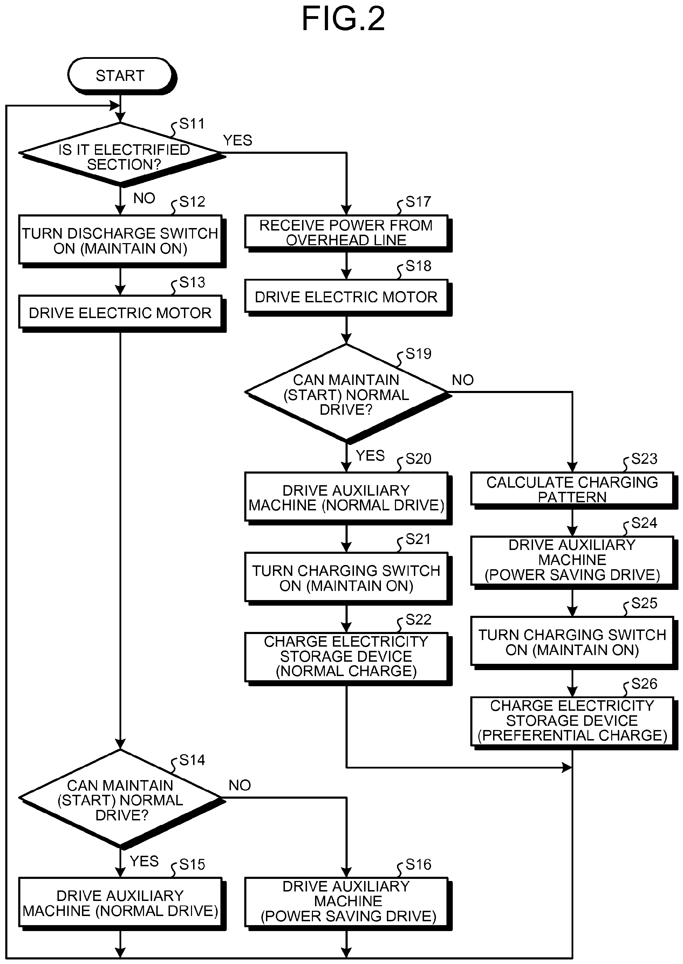

FIG. 2 is a processing flowchart of the electric vehicle control device according to the embodiment.

The controller 16 first determines whether the railway vehicle is traveling in an electrified section (non-electrified section) (step S11). For example, whether the railway vehicle is traveling in the electrified section may be determined (distinguished), by providing a switch for switching between a mode in which the overhead line is present and a mode in which the overhead line is not present on an operation panel in the driver's cabin, and when the driver operating the switch. Alternatively, whether the railway vehicle is traveling in the electrified section may be determined by comparing positional information obtained from a position specifying device such as a global positioning system (GPS), with data in which positional information along the railway route is associated with the electrified section or the non-electrified section.

At step S11, if the railway vehicle is traveling in the electrified section (Yes at step S11), the power conversion device 6 receives power from the direct current overhead line 1 (step S17), converts the direct current power received from the direct current overhead line 1 to three-phase alternating current power to output to the main electric motor 7, and drives the main electric motor 7 (step S18).

Next, the controller 16 determines whether a normal driving state can be maintained (or started) (step S19).

In this process, the normal driving state is a state at which the railway vehicle is determined to be capable of traveling a scheduled traveling section in the electrified section as planned. In this case, the electricity storage device is charged with a predetermined charging pattern, before the railway vehicle enters the non-electrified section from the electrified section. Thus, the railway vehicle can travel the non-electrified section sufficiently with the stored power of the storage device, and can return to the electrified section again.

At step S19, if the normal driving state can be maintained (or started) (Yes at step S19), the auxiliary power source device 8 receives power from the direct current overhead line 1, converts the direct current power received from the direct current overhead line 1 to three-alternating current power of constant voltage and constant frequency to supply to the auxiliary machine 9, and drives the auxiliary machine 9 in a normal mode (step S20). For example, an air conditioner, which is the auxiliary machine 9, is operated at a setting temperature, and the number of illumination devices, each of which is the auxiliary machine 9, being turned on is according to the setting.

Next, the controller 16 closes (ON state) the charging control switch 12 (step S21), charges the electricity storage device 11 normally by the charging device 10 (step S22), and returns the process to step S11 again.

In this case, the electricity storage device 11 is sufficiently charged while the railway vehicle is traveling in the electrified section, allowing the railway vehicle to travel in the non-electrified section with plenty of power to spare.

On the other hand, if the normal driving state cannot be maintained (or started) at step S19 (No at step S19), for example, if the railway vehicle needs to make a U-turn while traveling in the scheduled traveling section in the electrified section, due to a signal failure or the like, and travel towards the non-electrified section, the electricity storage device 11 will not be charged to a predetermined capacity with the scheduled normal charging pattern.

In other words, the electricity storage device 11 cannot be sufficiently charged to travel in the non-electrified section, by traveling in the electrified section where the railway vehicle can actually travel. Thus, the controller 16 calculates (recalculates) a charging pattern so that the electricity storage device 11 can be sufficiently charged while the railway vehicle is traveling in the electrified section, allowing the railway vehicle to travel in the non-electrified section (step S23).

More specifically, the controller 16 calculates a charging pattern (charging pattern for preferential charge) with which the charging power supplied to the electricity storage device 11 via the charging device 10 is to be increased, in other words, the charging pattern with the increased charging current. In the normal charging, the reason why low charging current is used instead of using the charging current of the charging pattern for preferential charge is to suppress the heat generation amount of the electricity storage device 11 and to extend the life.

The controller 16 then drives the auxiliary machine 9 in a power saving mode, so that the charging power supplied to the electricity storage device 11 is increased, in other words, the driving power of the auxiliary machine 9 is reduced (step S24). For example, in the example described above, the setting temperature of the air conditioner is set to a power saving side (set to the high temperature side when the air conditioner is used to cool, and set to the low temperature side when the air conditioner is used to heat), or the number of illumination devices being turned on is reduced.

Next, the controller 16 closes (ON state) the charging control switch 12 (step S25), charges the electricity storage device 11 preferentially by the charging device 10 (step S26), and returns the process to step S11 again.

As a result, the electricity storage device 11 can be charged in a shorter period of time than that of the normal charging.

At step S11, if the railway vehicle is not traveling in the electrified section, in other words, if the railway vehicle is traveling in the non-electrified section (No at step S11), the controller 16 closes (ON state) the discharge control switch 14 (step S12). Whether the railway vehicle is not traveling in the electrified section may also be determined slightly before the railway vehicle enters the actual non-electrified section. As described above, by using the switch for switching between the mode in which the overhead line is present and the mode in which the overhead line is not present, or the GPS device, it is possible to identify where the non-electrified section starts. Consequently, it is easy to implement such a control.

In this manner, the power conversion device 6 receives power from the electricity storage device 11, converts the direct current power received from the electricity storage device 11 to three-phase alternating current power to output to the main electric motor 7, and drives the main electric motor 7 (step S13).

Next, the controller 16 determines whether the normal driving state can be maintained (or started) with the power currently stored in the electricity storage device 11 (step S14).

At step S14, if the normal driving state can be maintained (or started) (Yes at step S14), the auxiliary power source device 8 receives power from the electricity storage device 11, converts the direct current power received from the electricity storage device 11 to three-phase alternating current power of constant voltage and constant frequency to supply to the auxiliary machine 9, and drives the auxiliary machine 9 in a normal mode (step S15). For example, the air conditioner, which is the auxiliary machine 9, is operated at the setting temperature, and the number of illumination devices, each of which is the auxiliary machine 9, being turned on is set according to the setting.

At step S14, if the normal driving state cannot be maintained (or started) (No at step S14), the auxiliary machine 9 is driven in a power saving mode, so that the driving power of the auxiliary machine 9 is reduced, thereby suppressing the consumption of the stored power (step S16). For example, in the example described above, the setting temperature of the air conditioner is set to the power saving side (set to the high temperature side when the air conditioner is used to cool, and set to the low temperature side when the air conditioner is used to heat), or the number of illumination devices being turned on is reduced.

The controller 16 then returns the process to step S11 again, and thereafter, the same processes are repeated.

As described above, according to the present embodiment, even if the traveling state of the railway vehicle in the electrified section is changed by some reasons, it is possible to store power so that the railway vehicle can travel non-electrified sections, while the railway vehicle is traveling in the electrified section. Thus, the railway vehicle can reliably travel in the non-electrified section.

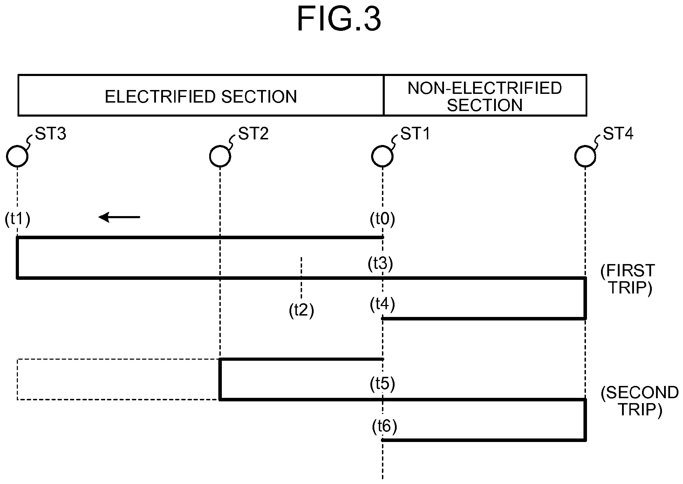

The following describes more specific operations. FIG. 3 is an exemplary diagram of a driving state of the railway vehicle.

In FIG. 3, to simplify the explanation and for easy understanding, it is assumed that the railway vehicle (hybrid power supply-type train) travels on a railway track that does not have a branch and that extends between the electrified section and the non-electrified section.

In other words, the railway vehicle starts from the starting station of a station ST1 that is located at the boundary between the electrified section and the non-electrified section. The railway vehicle first makes a round trip in the electrified section, makes a round trip in the non-electrified section, and returns to the starting station ST1, which is also the terminal station.

This is because, before the railway vehicle travels in the non-electrified section with the power of the electricity storage device 11, the railway vehicle travels in all the electrified sections that are capable of charging the electricity storage device 11, so that a power storage amount of the electricity storage device 11 is sufficient for the railway vehicle to travel in the non-electrified section.

In the example of FIG. 3, in the first trip that is in a normal driving state, the railway vehicle receives power supplied from the direct current overhead line 1, starts the first station ST1, which is the starting station, travels in the electrified section, heads towards a second station ST2, and then arrives at a third station ST3 that is the terminal station of the electrified section.

The railway vehicle that has arrived at the third station ST3 reverses the traveling direction, and this time, arrives at the first station ST1 via the second station ST2.

The railway vehicle then starts the first station ST1 upon receiving power supplied from the electricity storage device 11, travels in the non-electrified section, and heads towards a fourth station ST4. The railway vehicle that has arrived at the fourth station ST4 reverses the traveling direction and arrives at the first station ST1.

On the contrary, in the second trip, as illustrated in FIG. 3, a signal failure or the like has occurred in the section between the second station ST2 and the third station ST3, thereby preventing the railway vehicle to travel in the section. In this case, the railway vehicle makes a U-turn at the second station ST2, and heads towards the fourth station ST4.

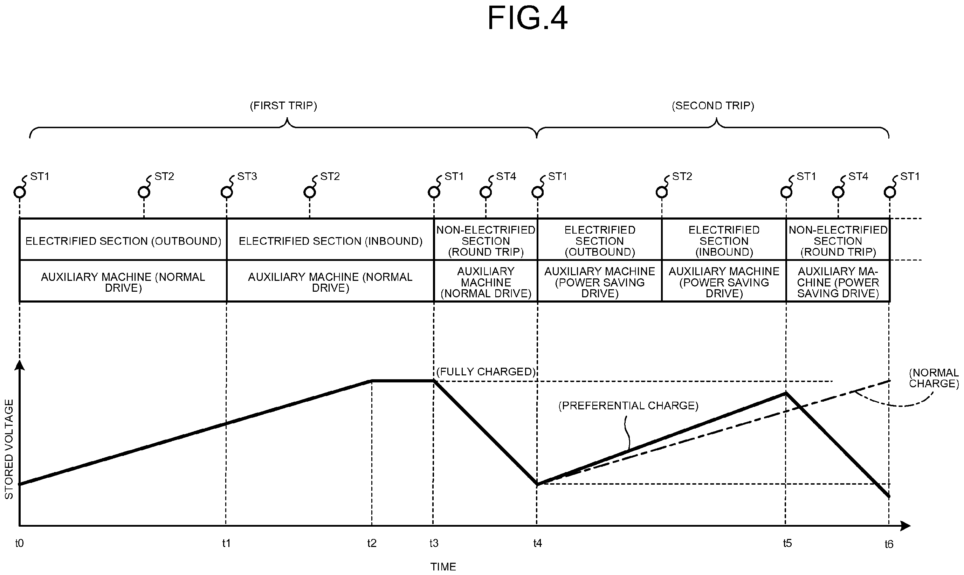

FIG. 4 is an exemplary diagram of a charging state of the electricity storage device.

As illustrated in FIG. 4, in the first trip, the railway vehicle receives power supplied from the direct current overhead line 1, and starts the first station ST1, which is the starting station, at time t0.

Consequently, the controller 16 closes (ON state) the charging control switch 12.

In this process, the auxiliary power source device 8 converts the direct current power of constant voltage and constant frequency supplied from the direct current overhead line 1 to three-phase alternating current power. The charging device 10 boosts the direct current power of constant voltage and constant frequency supplied from the auxiliary power source device, and continues to supply the power to the electricity storage device 11, as charging power.

As a result, as illustrated in FIG. 4, the stored power of the electricity storage device 11 is gradually increased. The electricity storage device 11 is fully charged at time t2, that is before the railway vehicle returns to the first station ST1 via the second station ST2, after starting from the first station ST1 and arrives at the third station ST3 via the second station ST2 at time t1, and making a U-turn at the third station.

Before the railway vehicle starts the first station ST1 at time t3 and travels in the non-electrified section, while the electricity storage device 11 is fully charged, the controller 16 separates the pantograph 2 from the direct current overhead line 1, and opens (OFF state) the charging control switch 12. The controller 16 then closes (ON state) the discharge control switch 14.

The direct current power accumulated in the electricity storage device 11 is supplied to the power conversion device 6 and the auxiliary power source device 8 via the reverse flow prevention diode 15 during discharging.

In this manner, the power conversion device 6 receives power from the electricity storage device 11, converts the direct current power received from the electricity storage device 11 to three-phase alternating current power to output to the main electric motor 7, drives the main electric motor 7 to drive the railway vehicle in the non-electrified section, makes a round trip to the fourth station ST4 on the railway track 4, and arrives at the first station ST1 again at time t4.

While traveling in the non-electrified section, the auxiliary power source device 8 receives power from the electricity storage device 11, converts the direct current power received from the electricity storage device 11 to three-phase alternating current power of constant voltage and constant frequency to supply to the auxiliary machine 9, and drives the auxiliary machine 9 in a normal mode.

As a result, during the period from the time t3 to the time t4, the stored power of the electricity storage device 11 is consumed, and stored voltage of the electricity storage device 11 continues to decrease.

Upon being notified that a signal failure or the like has occurred in the section between the second station ST2 and the third station ST3, while the railway vehicle is being stopped at the first station ST1, the controller 16 calculates (recalculates) a charging pattern so that the electricity storage device 11 can be sufficiently charged while traveling in the electrified section, allowing the railway vehicle to travel in the non-electrified section. The controller 16 then drives the auxiliary machine 9 in a power saving mode, so that the charging power to be supplied to the electricity storage device 11 is increased, in other words, the driving power of the auxiliary machine 9 is reduced.

As a result, while the railway vehicle is traveling in the electrified section during the period between the time t4 and the time t5, the controller 16 charges the electricity storage device 11 preferentially by the charging device 10.

In other words, as illustrated in FIG. 4, the stored voltage of the electricity storage device 11 is increased in a shorter period of time than that of the normal charging. Depending on the traveling state of the railway vehicle in the electrified section, the electricity storage device 11 may not be fully charged at the time t5 in FIG. 4. However, the stored voltage of the electricity storage device 11 will be charged, so that the railway vehicle can travel in the non-electrified section without any problem.

Before the railway vehicle starts the first station ST1 and travels in the non-electrified section at the time t5, the controller 16 separates the pantograph 2 from the direct current overhead line 1, and opens (OFF state) the charging control switch 12. Then, the controller 16 closes (ON state) the discharge control switch 14.

The direct current power accumulated in the electricity storage device 11 is then supplied to the power conversion device 6 and the auxiliary power source device 8 via the reverse flow prevention diode 15 during discharging.

In this manner, the power conversion device 6 receives power from the electricity storage device 11, converts the direct current power received from the electricity storage device 11 to three-phase alternating current power to output to the main electric motor 7, drives the main electric motor 7 to drive the railway vehicle in the non-electrified section, makes a round trip to the fourth station ST4 on the railway track 4, and arrives at the first station ST1 again at time t6.

While the railway vehicle is traveling in the non-electrified section, the auxiliary power source device 8 receives power from the electricity storage device 11, converts the direct current power received from the electricity storage device 11 to three-phase alternating current power of constant voltage and constant frequency to supply to the auxiliary machine 9, and drives the auxiliary machine 9 in a power saving mode.

As a result, although the electricity storage device 11 is not fully charged at the time t5, the stored power of the electricity storage device 11 is consumed during the period of time between the time t5 and the time t6, and the stored voltage of the electricity storage device 11 continues to decrease, the railway vehicle can arrive at the first station ST1 safely.

In the above description, the traveling state of the railway vehicle in the non-electrified section is not described in detail. If the stored voltage of the electricity storage device 11 before the railway vehicle travels in the non-electrified section is low, and if it is assumed that the power is not sufficient for the railway vehicle to travel in the non-electrified section in the normal traveling state, the railway vehicle may travel the non-electrified section in a lower speed and by not using brakes as much as possible. Consequently, even if the voltage of the electricity storage device 11 is low, the railway vehicle can return to the electrified section.

As described above, according to the present embodiment, it is possible to simplify the device configuration of the hybrid power supply-type train and allow the train to reliably travel in the non-electrified section.

While some embodiments of the present invention have been described, these embodiments are merely examples, and not intended to limit the scope of the present invention. These novel embodiments may be implemented in various other forms, and various omissions, replacements, and modifications may be made without departing from the scope and spirit of the invention. These embodiments and modifications are included in the scope and spirit of the present invention, and are included in the present invention described in the appended claims and their equivalents.

## Claims

1. An electric vehicle control device, comprising:
a power conversion device that receives power supplied from an overhead line in an electrified section to perform power conversion, and that supplies driving power to a vehicle driving motor;
an auxiliary power source device that receives the power supplied from the overhead line in the electrified section to perform power conversion, and that supplies auxiliary machine driving power having predetermined auxiliary machine driving voltage that is lower than voltage of the driving power, to an auxiliary machine;
a charging device that converts the auxiliary machine driving power being supplied to the charging power to supply;
an electricity storage device that receives supply of the charging power and stores therein; and
a controller that connects the electricity storage device with the charging device and causes the charging device to charge the electricity storage device in the electrified section, and that causes the electricity storage device to supply stored power of the electricity storage device to at least the power conversion device, instead of the power from the overhead line in a non-electrified section.

2. The electric vehicle control device according to claim 1, wherein the controller increases, while the vehicle is traveling in the electrified section, a power amount to be supplied to the electricity storage device so that a power storage amount with which a vehicle is capable of traveling the non-electrified section in a normal traveling state is capable of being secured.

3. The electric vehicle control device according to claim 2, wherein the controller controls, when a length of a scheduled traveling route in the electrified section is reduced, a driving state of the auxiliary machine, and reduces power supplied to the auxiliary machine from the auxiliary power source device to increase the power amount to be supplied to the electricity storage device via the charging device.

4. The electric vehicle control device according to claim 2, wherein the controller causes, when an accumulation amount with which the vehicle is capable of traveling the non-electrified section in the normal traveling state is not capable of being secured while the vehicle is traveling in the electrified section, the vehicle to travel the non-electrified section in a power saving traveling state,.

5. The electric vehicle control device according to claim 4, wherein the controller controls a driving state of the auxiliary machine in the power saving traveling state to reduce the power supplied to the auxiliary machine from the auxiliary power source device.
